# EUROPEAN PATENT APPLICATION

(11) **EP 3 018 574 A1**
(43) Date of publication of application: **11.05.2016**
(21) Application number: 15185851.1
(22) Date of filing: 18.09.2015
(51) Int. Cl.: G06F 3/14

(54) **SYSTEM AND METHOD FOR MULTI-DISPLAY**

(30) Priority: 06.11.2014 KR 20140153596
(71) Applicant: Samsung Electronics Co., Ltd., Gyeonggi-do 16677 (KR)
(72) Inventor: PARK, Sung Woo, Seoul (KR); YUN, Hyun Kyu, Seoul (KR)
(74) Representative: Hewett, Jonathan Michael Richard

(57) **Abstract**

Disclosed herein are a multi-display system and method. The system may include a plurality of displays for displaying an image and a wireless image transmission device which is connected to the plurality of displays through wireless communication, and which searches for a connectable display among the plurality of displays, receives a signal transmitted from the searched display, and detects a display for displaying the image among the plurality of displays based on the received signal.

## Description

The present invention relates to a system and method for multi-display.

Displays are devices for displaying visual and three-dimensional image information. Recently, flat display devices having excellent performance in various aspects of being less limited in an installation space, easily providing a large screen image, and being easily flattened have been developed.

As representative display devices, there are, for example, a liquid crystal display (LCD), an electroluminescent display (ELD), a field emission display (FED), a plasma display panel (PDP), a thin film transistor liquid crystal display (TFT-LCD), a flexible display, and an organic light emitting diode (OLED) display, etc.

Display devices described above are applied not only to televisions but also various fields. For example, a plurality of displays may be connected to be used as a large screen for advertisement.

Therefore, it is an aspect of the example embodiments of the present invention to provide a system and method for multi-display.

Additional aspects will be set forth in part in the description which follows and, in part, will be apparent from the description.

In accordance with one aspect of the example embodiments, a multi-display system includes a plurality of displays for displaying an image and a wireless image transmission device which is wirelessly connected to the plurality of displays and is configured to search for a connectable display among the plurality of displays, to receive a signal transmitted from the searched display, and to detect a display for displaying the image among the plurality of displays based on the strength of the received signal, in which each of the plurality of displays display a divided portion of one image.

The wireless image transmission device may detect a display having a received signal strength indication (RSSI) included within an RSSI range of the same group among RSSIs transmitted from the searched displays as the display for displaying the image.

The wireless image transmission device may output a test message, and a message inquiring whether to use the display, to the display for displaying the image.

The wireless image transmission device may output a test message and a message for requesting of a user for controlling the display to the display for displaying the image.

When the number of the displays for displaying the image is not identical to a preset display number, the wireless image transmission device may output a display check recommendation message to the display for displaying the image and then may perform detection of the display again after a preset time passes.

The wireless image transmission device may match an identifiable address of each of the displays for displaying the image with a matrix address.

The system may further include a remote controller configured to transmit and receive a signal with the displays wirelessly, and the wireless image transmission device may be configured to sequentially put the respective displays for displaying the image into a state for setting a matrix address and may set the matrix address based on identification information transmitted from the remote controller.

The system may further include a remote controller configured to transmit and receive an infrared (IR) signal with the displays and an IR sensor installed at each of the plurality of displays to transmit and receive an IR signal, in which the wireless image transmission device may be configured to set the matrix address based on identification information having the form of the IR signal received by the IR sensor from the remote controller at each of the displays for displaying the image.

The system may further include an image recognition device installed at each of the plurality of displays to recognize an image, in which the wireless image transmission device may be configured to set the matrix address based on a time sequence of sensing a recognition object by the image recognition device of each of the displays for displaying the image.

The signal may be a radio frequency (RF) signal.

In accordance with another aspect of the example embodiments, a multi-display system includes a plurality of displays for displaying an image and a wireless image transmission device which is wirelessly connected to the plurality of displays and is configured to transmit a signal to the plurality of displays, to receive a reflected signal as a response from the plurality of displays, and to detect a display for displaying the image among the plurality of displays based on the received reflected signal, in which each of the plurality of displays display a divided portion of one image.

The reflected signal may be an IR signal.

In accordance with still another aspect of the example embodiments, a multi-display method includes putting a plurality of displays and a wireless image transmission device into a connection standby state, searching, by the wireless image transmission device, for a connectable display among the plurality of displays, receiving, at the wireless image transmission device, a signal transmitted from the searched display through wireless communication, and detecting, by the wireless image transmission device, a display from among the plurality of displays for displaying an image based on the strength of the received signal, in which each of the plurality of displays display a divided portion of one image.

The strength of the received signal may be an RSSI. In detecting the display, a display having an RSSI included within an RSSI range of the same group among RSSIs transmitted from the searched displays may be detected as the display for displaying the image.

Detecting of the display may include outputting a test image and a message inquiring whether to use the display to the display for displaying the image and determining a corresponding display with respect to which a response for whether to use the display is received from the user as the display for displaying the image.

Detecting of the display may include checking whether the number of the displays for displaying the image is identical to a preset display number and outputting, when the number is not identical to the preset display number, a test image and a message requesting a user to control the display to the display for displaying the image.

The message of requesting user control of the display may be one of a power off inducing message and a reset inducing message with respect to one of an unnecessary display and a disconnected display.

The method may further include, after the detecting of the display for displaying the image, matching, by the wireless image transmission device, a matrix address with an identifiable address of each of the displays for displaying the image.

Matching of the matrix address may include sequentially putting, by the wireless image transmission device, each of the displays for displaying the image into a state for setting the matrix address and setting the matrix address of each of the plurality of displays based on identification information transmitted from a remote controller.

Each of the plurality of displays may include an IR sensor, and matching of the matrix address may include receiving, at the wireless image transmission device, identification information having an IR signal form received at the IR sensor of each of the plurality of displays for displaying the image from a remote controller and setting the matrix address based on the identification information.

Each of the plurality of displays may include an image recognition device, and matching of the matrix address may include sensing, by the wireless image transmission device, a recognition object recognized by the image recognition device of each of the displays for displaying the image and setting the matrix address based on a time sequence of sensing the recognition object.

In accordance with yet another aspect of the example embodiments, a multi-display method includes putting a plurality of displays and a wireless image transmission device into a connection standby state, transmitting, by the wireless image transmission device, a signal to the plurality of displays, receiving, at the wireless image transmission device, a reflected signal as a response transmitted from the detected display, and detecting, by the wireless image transmission device, a corresponding display from which the reflected signal is received as a display for displaying an image, in which each of the plurality of displays display a divided portion of one image.

The reflected signal may be an IR signal.

These and/or other aspects and advantages of the example embodiments will become more apparent from the following detailed description, taken in conjunction with the accompanying drawings of which like reference numerals refer to like elements, and wherein:
FIG. 1 is a configuration diagram illustrating a multi-display system;
FIG. 2 is a diagram illustrating a method of detecting a display according to an example embodiment;
FIG. 3 is a diagram illustrating a method of detecting a display according to an example embodiment;
FIGS. 4 and 5 are views illustrating a method of detecting the display;
FIG. 6 is a diagram illustrating a method of determining the number of detected displays;
FIG. 7 is a view illustrating a method of assigning a matrix address of a display according to an example embodiment;
FIG. 8 is a view illustrating a method of assigning a matrix address of a display according to an example embodiment;
FIG. 9 is a view illustrating a method of assigning a matrix address of a display according to an example embodiment;
FIG. 10 is a view illustrating a method of changing an order of a display according to an example embodiment;
FIG. 11 is a view illustrating a method of changing an order of a display according to an example embodiment;
FIG. 12 is a view illustrating a method of changing an order of a display according to an example embodiment;
FIG. 13 is a flowchart illustrating a method of connecting displays; and
FIGS. 14 and 15 are flowcharts illustrating the method of connecting displays of FIG. 13.

Reference will now be made to the example embodiments, examples of which are illustrated in the accompanying drawings, wherein like reference numerals refer to like elements throughout.

Aspects, particular effects, and technical features will be apparent by the following detailed description and example embodiments related to the attached drawings. Throughout the drawings, while assigning reference numerals to elements, even when shown in different drawings, like reference numerals designate like elements. While describing the example embodiments, when it is determined that a detailed description of components or functions well known in the art may unnecessarily obscure the points of the example embodiment, the detailed description thereof will be omitted. It will be understood that although the terms "first", "second", etc. may be used herein to describe various components, these terms are only used to distinguish one component from another. These components should not be limited by these terms.

Hereinafter, the example embodiments will be described in detail with reference to the attached drawings.

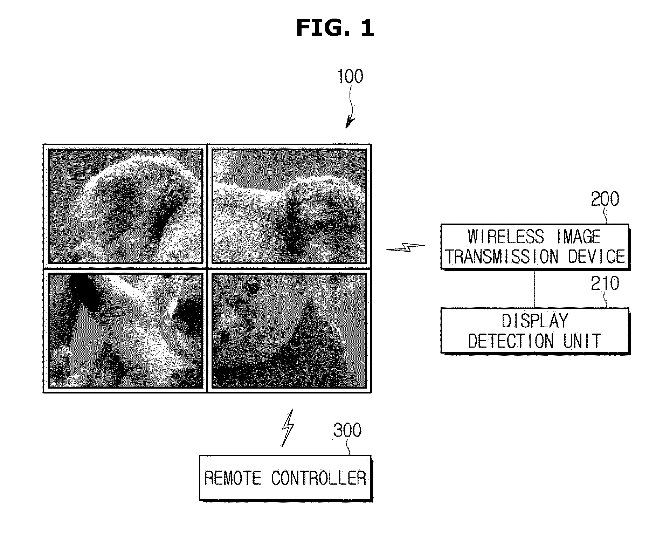

FIG. 1 is a configuration diagram illustrating a multi-display system.

As illustrated in FIG. 1, the multi-display system may include a plurality of displays 100 which have a wireless communication function and display images and a wireless image transmission device 200 which has a wireless communication function and detects a display for displaying an image from among the plurality of displays 100 based on a signal transmitted from the plurality of displays 100 through wireless communication.

For example, the wireless image transmission device 200 may be connected to the plurality of displays 100 through wireless communication and may transmit images transmitted through a communication network from an external server such as a broadcasting company and an advertisement agency, images stored therein, or images stored in an external storage device to display, etc.

Also, the wireless image transmission device 200 may include a display detection unit 210 and may detect the display for displaying the image from among the plurality of displays 100. The display for displaying the image, as shown in FIG. 1, indicates a plurality of displays which display divided portions of one image to act like a single large display. In the example embodiments, the number of displays may be determined based on the preference of a user.

The wireless image transmission device 200 checks a preferred number of displays of the user and confirms whether the number of detected displays is identical to the intention of the user. When the preferred number is more or less than the number of detected displays, it is possible to induce performance of connection appropriate for the intention of the user in the manner described below.

First, the wireless image transmission device 200 may be connected to the plurality of displays 100 through wireless communication, may search for connectable ones of the plurality of displays 100, may receive a signal transmitted from the searched display 100, and may detect the display 100 for displaying the image among the plurality of displays 100 based on the intensity of the received signal. Each of the plurality of displays 100 may display a divided portion of one image. Also, the signal transmitted from the searched display 100 may be a radio frequency (RF) signal.

For example, the wireless image transmission device 200 may check the number of the connectable displays 100 and may store the checked number and media access control (MAC) addresses thereof.

Also, the wireless image transmission device 200 may receive a present received signal strength indication (RSSI) from each of the searched displays 100.

Also, the wireless image transmission device 200 may detect displays having an RSSI included within a predetermined RSSI range among RSSIs transmitted from the searched displays 100 in the same group, and set displays in that one group as the displays for displaying the image.

The wireless image transmission device 200 may set a group for each RSSI range using a principle that displays located at a similar distance have a similar RSSI and detects the display 100 for displaying the image when an RSSI received from the display 100 is included in a particular range. Here, the setting of each RSSI range for a group may be set based on the need of an operator.

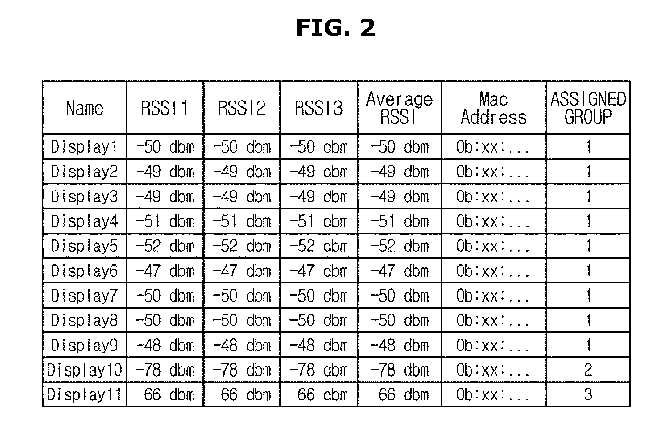

For example, as shown in FIG. 2, when there are present searched displays 1 to 11, the wireless image transmission device 200 may store MAC addresses thereof and may receive RSSIs of -50 dbm, -49 dbm, -49 dbm, -51 dbm, -52 dbm, -47 dbm, -50 dbm, -50 dbm, -48 dbm, -78 dbm, and -66 dbm from the respective searched displays 100.

The wireless image transmission device 200 may consider the displays 100 having similar RSSIs as the same group (except RSSIs of -78 dbm and -66 dbm among the RSSIs). The wireless image transmission device 200 may preset a range of RSSI to be considered as the same group. Displays in one particular group may be set as the displays to be used for displaying the image.

Since an RSSI value of the display 100 is not regular but variable based on surrounding circumstances, the wireless image transmission device 200 considers peripheral frequency circumstances and detects the RSSI several times, for example, RSSIs (-50 dbm, -49 dbm, -49 dbm, -51 dbm, -52 dbm, -47 dbm, -50 dbm, -50 dbm, -48 dbm, -78 dbm, -66 dbm), and RSSI3(-50 dbm, -49 dbm, -49 dbm, -51 dbm, -52 dbm, -47 dbm, -50 dbm, -50 dbm, -48 dbm, -78 dbm, and -66 dbm) shown in FIG. 2, and determines an average value of RSSIs (an average RSSI shown in FIG. 2), thereby increasing accuracy. The RSSI for detecting the display for displaying the image may be the average RSSI value.

A method of measuring a distance at the wireless image transmission device 200 to detect the display for displaying the image is not limited to the RSSI described above and any methods of wirelessly measuring a distance will be available. For example, a method of measuring a time of arrival (TOA) of frequency between tags included in the display 100 and the wireless image transmission device 200, respectively, may be available. Second, the wireless image transmission device 200 may perform connection among the plurality of displays 100 through an infrared (IR) input trigger.

The wireless image transmission device 200 may be connected to the plurality of displays 100 through wireless communication, may transmit a signal to the plurality of displays 100 and receive a reflected signal as a response, and may detect the display for displaying the image among the plurality of displays 100 based on the received reflected signal. Each of the plurality of displays 100 may display a divided portion of one image.

For example, the wireless image transmission device 200 may transmit a IR signal to the plurality displays 100 which stand by for connection and may detect one of the plurality of displays 100 which transmits a response IR signal to the IR signal as the display 100 to display images.

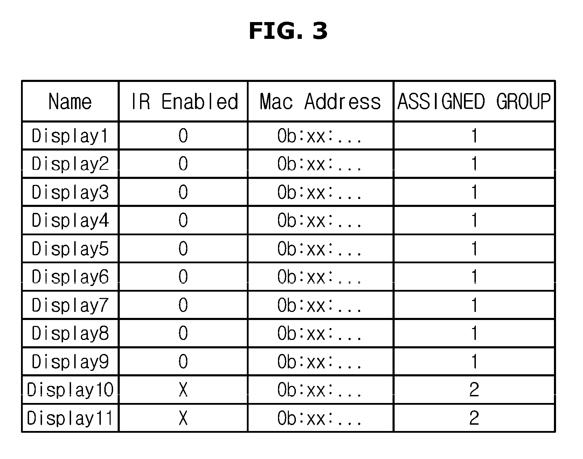

For example, as shown in FIG. 3, when there are present displays 1 to 11 which stand by for connection, and the response IR signal is received (refer to IR enabled '0' of FIG. 3, in contrast to 'x') from each of the displays 100 after transmitting the IR signal, the wireless image transmission device 200 may detect the corresponding displays 100 as the displays 100 for displaying the image.

When the number of the displays for displaying the image is identical to a preset display number, the wireless image transmission device 200 may output a test image and a message requesting use of the display to the display for displaying the image.

For example, when the number of the displays for displaying the image is n², for integer n, and combinable, for example, 4, 9, 16, ..., the wireless image transmission device 200 transmits the test image for confirmation to the displays 100 for displaying the image and receives a confirmation from the user of whether all the displays which are to be connected are normally connected.

When four displays are detected, the wireless image transmission device 200 transmits the test image to the four detected displays 100-1, 100-2, 100-3, and 100-4 and then receives a confirmation from the user of whether all the displays to be connected are normally detected.

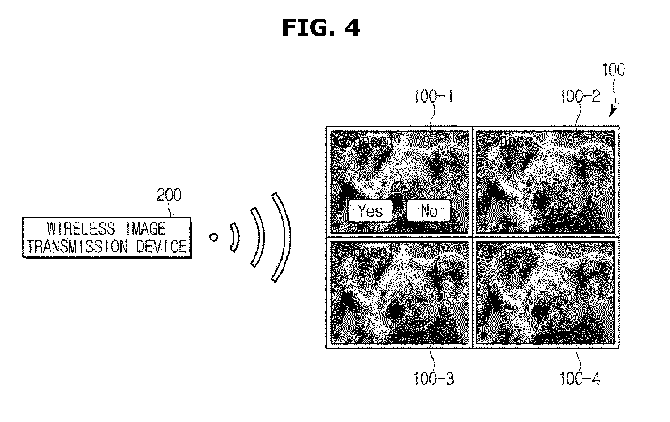

For example, as shown in FIG. 4, when the four displays 100-1, 100-2, 100-3, and 100-4 are detected, the wireless image transmission device 200 transmits the test image to the four displays 100-1, 100-2, 100-3, and 100-4 and then displays a menu such as Yes and No shown in FIG. 4 for receiving a confirmation of whether the corresponding displays 100-1, 100-2, 100-3, and 100-4 are displays on which the user intends to display. When the test image is normally displayed on the displays on which the user intends to display, the wireless image transmission device 200 may finish the detecting of the display.

The wireless image transmission device 200 may output the test image, and the message requesting the user to control the display, to the displays for displaying the image.

When the test image is not normally displayed or is not displayed on the display 100 on which the user intends to display, the wireless image transmission device 200 may display a display control request message on the display 100. The message induces checking a state of the display 100 on which the test image is not displayed, confirming the unnecessarily connected display 100 and taking an operation to disconnect the display 100.

The display control request message for the user will indicate a message for inducing the control on the display 100 such as a display check inducing message and a power off inducing message with respect to the unnecessary display.

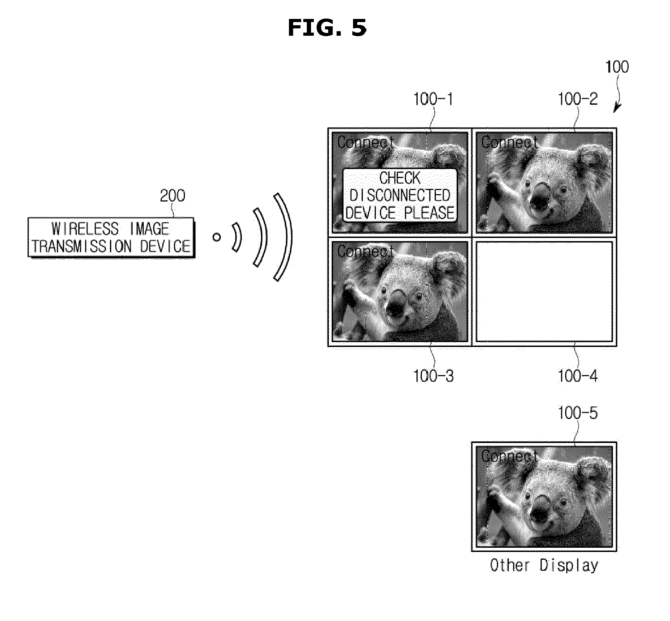

For example, as shown in FIG. 5, when the wireless image transmission device 200 transmits the test image and then not all the displays on which the user intends to display are normally detected or displayed, a device inspection inducing message for the display 100-4 on which the test image is not displayed, for example, "Check a disconnected device please" or a message for checking the unnecessarily connected display 100-5 and inducing power off, for example, "Turn off the power of an unnecessarily connected device please" may be displayed on the main display 100-1.

The wireless image transmission device 200 may select a first or another one of the displays 100 which normally display the test image as the main display 100-1.

When the number of the displays for displaying the image is not identical to the preset display number, the wireless image transmission device 200 may output a display inspection inducing message on the display 100 for displaying the image and then may perform the detecting of the display again after a preset time passes. Here, the wireless image transmission device 200 may allow the display inspection inducing message to be displayed on the display 100-1 selected as the main display.

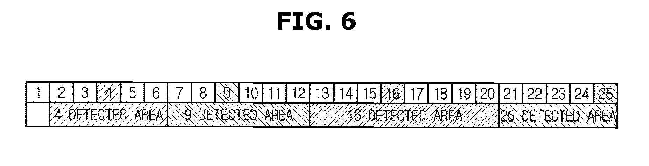

The number of the displays for displaying the image may be according to a rule of n². When a number is not n², the number of displays may be set for the user by the wireless image transmission device as shown in FIG. 6.

For example, as shown in FIG. 6, when the number of the detected displays for displaying the image is 2 to 6, the preset display number is considered as 4. When the number of the detected displays for displaying the image is 7 to 12, the preset display number is considered as 9. When the number of the detected displays for displaying the image is 13 to 20, the preset display number is considered as 16. When the number of the detected displays for displaying the image is 21 to 25, the preset display number is considered as 25.

When the number of the detected displays for displaying the image is 5, the wireless image transmission device 200 considers the preset display number as 4 and outputs a control request for inducing the power off of one display.

When the number of the detected displays for displaying the image is 14, the wireless image transmission device 200 understands the intention of the user as connecting 16 displays in total and outputs a control request for inducing inspection of two disconnected displays.

A control request message may be output on the display set as the main display 100-1 (refer to FIG. 5).

The number of the displays for displaying the image described above is not limited to the rule of n² but may be changeable based on the need of the operator.

The wireless image transmission device 200 may arrange the detected displays 100 after the detecting of the displays 100 for displaying the image is completed. Here, the wireless image transmission device 200 may perform a matrixing operation by matching an identifiable address, for example, an MAC address of each of the displays 100 for displaying the image with a matrix address. Here, the matrixing operation, as shown in FIG. 1, indicates determining an order based on an arrangement position of each of the plurality of displays 100 and matching identification information, that is, the MAC address of the corresponding display based on the order to divide and output one image through the plurality of displays 100.

A method of setting a matrix address through wireless communication among the wireless image transmission device 200, the display 100, and a remote controller 300 will be described.

For example, the multi-display system may further include the remote controller 300 capable of transmitting and receiving a signal with the display 100 through wireless communication.

The wireless image transmission device 200 may sequentially convert each of the displays 100 for displaying the image into a state for setting a matrix address and may set the matrix address based on identification information transmitted from the remote controller 300.

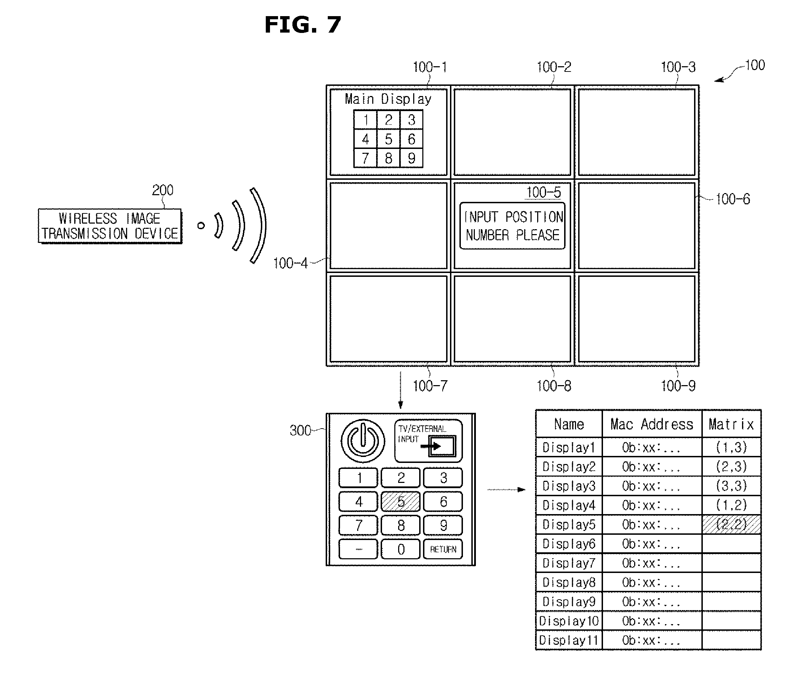

For example, as shown in FIG. 7, the wireless image transmission device 200 may sequentially output an identification information input request message such as "Input a position number please" on the displays 100-1 to 100-9 for displaying the image and may set the matrix address based on the identification information transmitted from the remote controller 300 based on the selection of the user, for example, 5 selected through the remote controller 300 shown in FIG. 7.

When the number of the displays 100 for displaying the image is 9 and the displays 100 are arranged 3x3 as shown in FIG. 7, the wireless image transmission device 200 may set a corresponding matrix address based on an order of the identification information input for each of the displays 100 and may match an MAC address of the corresponding display, for example, Name Display 5, MAC address ob:XX,..., and Matrix (2.2) in FIG. 7. In other words, when identification information which indicates that the display 100-5 in FIG. 7 is a fifth display is received, the wireless image transmission device 200 sets the matrix address (2,2) to allow the display 100-5 to be located fifth in an arrangement form of 3x3.

When the arrangement of the displays 100 for displaying the image is 4x4 or more, since it is necessary to input coordinates with two or more numbers when the matrix address is set, additional operations such as number input keys + a confirmation key may be needed on the remote controller 300. Related to this, previous settings for recognizing the number input keys + the confirmation key may be needed in the wireless image transmission device 200 and the display 100.

A method of setting a matrix address through transmitting and receiving an IR signal among the wireless image transmission device 200, the display 100, and the remote controller 300 will be described.

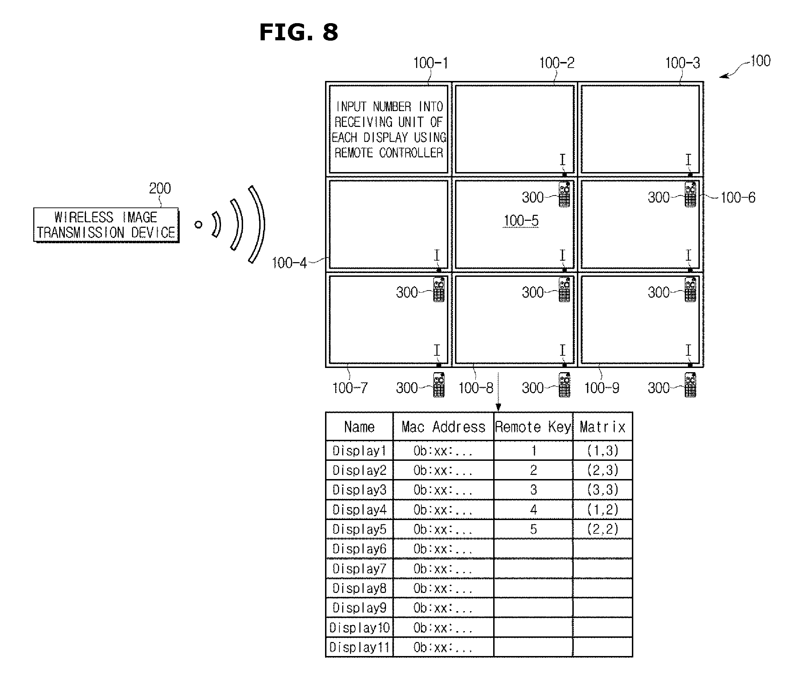

For example, the multi-display system may further include an infrared sensor I (refer to FIG. 8) installed at the remote controller 300 capable of transmitting and receiving an IR signal with the display 100 and each of the plurality of displays 100 to transmit and receive the IR signal.

The wireless image transmission device 200 may set the matrix address based on identification information in an IR signal form received at the IR sensor I of each of the displays 100 for displaying the image from the remote controller 300.

For example, as shown in FIG. 8, an identification information input request message such as "Input a number into a receiving unit of each display using a remote controller, please" is displayed on the displays 100-1 to 100-9 for displaying the image, at which the IR sensor I is installed. After that, the matrix address is set based on the identification information, for example, remote keys 1, 2, 3, 4, 5, ... (refer to FIG. 8) transmitted from the remote controller 300 located adjacently to the IR sensor I.

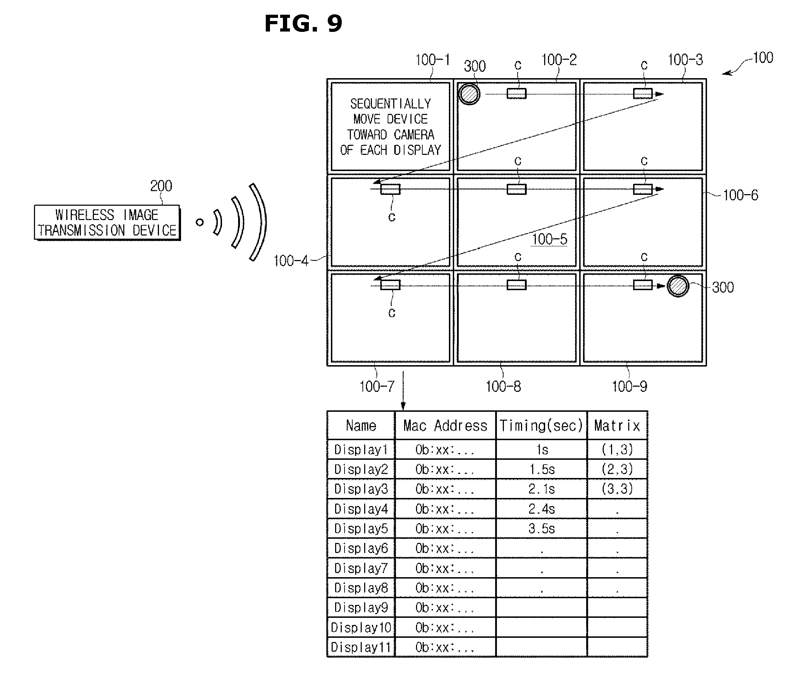

A method of setting a matrix address by recognizing a recognition object through an image recognition device C (refer to FIG. 9) mounted on the display 100 will be described. The image recognition device C may, for example, be a camera but is not limited thereto.

For example, the multi-display system may further include the image recognition device C of FIG. 9 mounted on each of the plurality of displays 100 to recognize the image.

The wireless image transmission device 200 may set the matrix address based on a time sequence of sensing a recognition object, for example, the remote controller 300 at the image recognition device C of each of the plurality of displays 100 for displaying the image, which are converted into a matrix address setting state through the image recognition device C. The recognition object is not limited to the remote controller 300 but may be any preset object for setting the matrix address. The image recognition device C described above may, for example, be a camera but is not limited thereto.

For example, as shown in FIG. 9, the wireless image transmission device 200 may display a message such as "Sequentially move a device toward a camera of each display please" on a main display among the displays 100 for displaying the image and may convert into the matrix address setting state.

After that, when the user allows the recognition object such as the remote controller 300 to be recognized by the image recognition device C of the display 100-2, the wireless image transmission device 200 displays that it is successfully recognized through the corresponding display 100. The user, who confirms the recognition, performs a procedure of recognizing the remote controller 300 on the next image recognition device C of the display 100-3.

When the procedure of recognizing the remote controller 300 is performed on the last display 100-9 through the process described above, a recognition point in time for each display 100 is stored. The corresponding recognition points in time are arranged and matched with each matrix based on a combination of the displays presently detected, for example, 2x2, 3x3, 4x4, etc., thereby converting the recognition points in time into the matrix.

In other words, the wireless image transmission device 200 may set the matrix address in an order of times obtained through the described procedure such as timing (sec) 1 s, 1.5 s, 2.1 s, 2.4 s, 3.5 s, ... shown in FIG. 9. When the display for displaying the image has a 3x3 matrix form, an address of the 3x3 matrix is matched based on an order of recognized displays 100 to set.

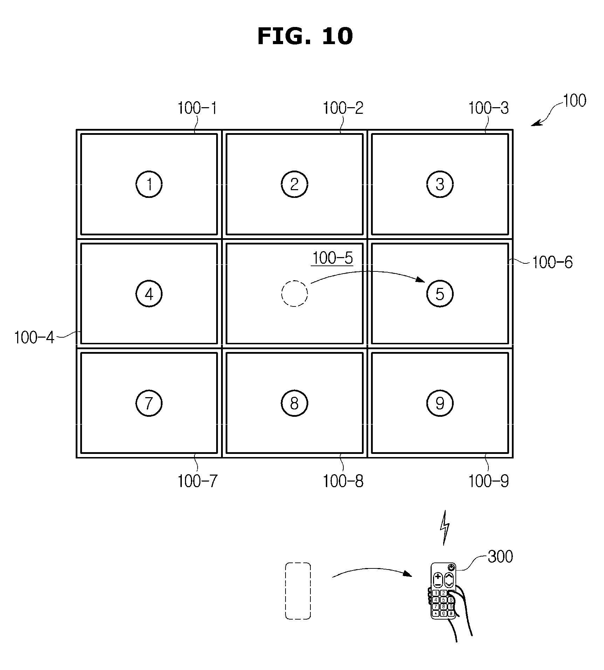

FIGS. 10 to 12 are views illustrating a method of changing an order of the displays.

The wireless image transmission device 200 may change an order of the plurality of displays 100.

As illustrated in FIG. 10, the order of the plurality of displays 100 may be changed using the remote controller 300 including a motion recognition function.

For this, the multi-display system may further include the remote controller 300 including the motion recognition function and wireless communication function.

The wireless image transmission device 200 converts a display ⑤ whose order is to be changed into an order change activation state and may change the order of the corresponding display ⑤ by recognizing motion information transmitted from the remote controller 300. For example, an exchange between numbers is performed by dragging screen ⑤ of the display whose number is set using the remote controller 300 including the motion recognition function.

According to the order change of the display 100, it is natural that a corresponding matrix address and a corresponding MAC address are changed based on the changed display 100.

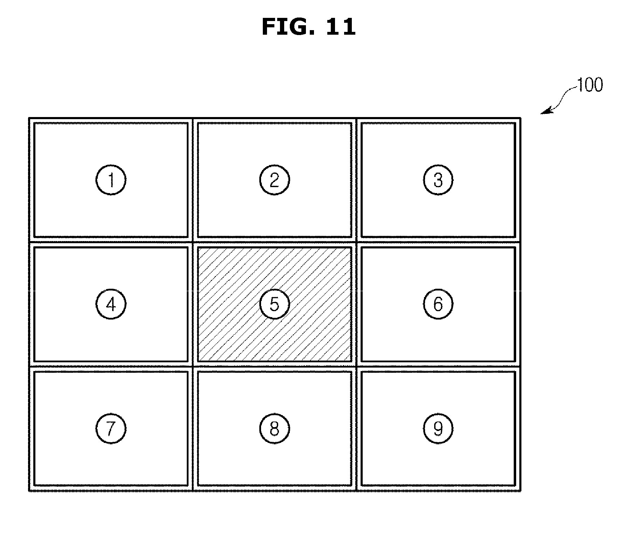

As shown in FIG. 11, the wireless image transmission device 200 converts the display ⑤ whose number is to be changed among the plurality of displays 100 into the order change activation state and may change the order based on identification information input by the user.

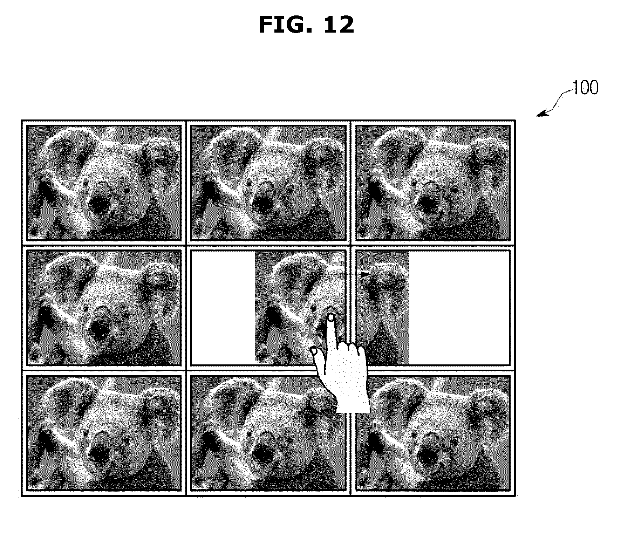

As shown in FIG. 12, since the plurality of displays 100 each include the motion recognition function, the user may change the order of the display 100 by exchanging a screen of the display 100 using a hand, a gesture, or the like.

The wireless image transmission device 200, the display 100, and the remote controller 300 described above are connected with one another through wireless communication, thereby transmitting and receiving information.

For example, the display 100 may transmit the motion information transmitted from the remote controller 300 to the wireless image transmission device 200. Otherwise, the wireless image transmission device 200 may directly receive the motion information from the remote controller 300.

Also, the display 100 may recognize a human hand and may transmit recognition information to the wireless image transmission device 200.

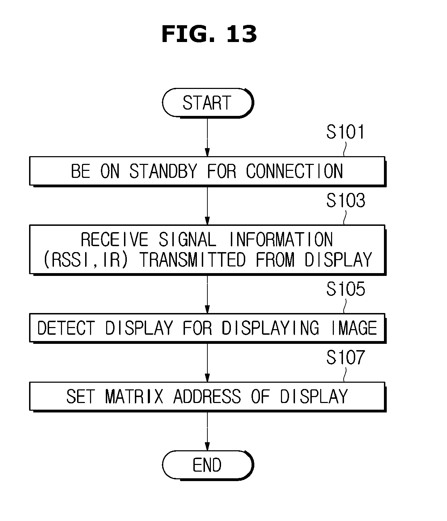

FIG. 13 is a flowchart illustrating a method of connecting displays.

The plurality of displays 100 and the wireless image transmission device 200 may be put into a connection standby state (S101). This means conversion into a state capable of mutually transmitting and receiving a signal for detecting a display.

The wireless image transmission device 200 may receive signal information transmitted from the plurality of displays 100 through wireless communication. The signal information is information for extracting an object which displays the image among the plurality of displays 100, for example, it may be one of RSSI and an IR signal but is not limited thereto.

The RSSI described above mathematically uses the strength of a signal based on a distance, measured as a radius from a reference point, in which the signal becomes weaker as the distance or radius increases. The same signal strength is received from mobile node at any point on a circle centred on the reference point.

The wireless image transmission device 200 may detect the display 100 for displaying the image among the plurality of displays 100 based on the signal information (S105).

The wireless image transmission device 200 may match an identifiable address of each of the displays for displaying the image with a matrix address (S107).

The wireless image transmission device 200 may sequentially convert each of the displays 100 for displaying the image into a state for setting the matrix address. The wireless image transmission device 200 may set the matrix address of each thereof based on identification information transmitted from the remote controller 300.

For example, as shown in FIG. 7, the wireless image transmission device 200 may sequentially output an identification information input request message such as "Input a position number please" on the displays 100-1 to 100-9 for displaying the image and may set the matrix address based on the identification information transmitted from the remote controller 300 based on the selection of the user, for example, 5 selected through the remote controller 300 shown in FIG. 7.

When the number of the displays 100 for displaying the image is 9 and the displays 100 are arranged 3x3 as shown in FIG. 7, the wireless image transmission device 200 may set a corresponding matrix address based on an order of the identification information input for each of the displays 100 and may match an MAC address of the corresponding display, for example, Name Display 5, MAC address ob:XX,..., and Matrix (2.2) in FIG. 7. That is, when the identification information which indicates that the display 100-5 in FIG. 7 is a fifth is received, the wireless image transmission device 200 sets the matrix address (2,2) to allow the display 100-5 to be located fifth in an arrangement form of 3x3.

Each of the plurality of displays 100 may include the IR sensor I (refer to FIG. 8) and the wireless image transmission device 200 may receive the identification information having the form of an IR signal received at the IR sensor I of each of the displays 100 for displaying the image from the remote controller 300. The wireless image transmission device 200 may set the matrix address based on the identification information.

For example, as shown in FIG. 8, an identification information input request message such as "Input a number into a receiving unit of each display using a remote controller, please" is displayed on the displays 100-1 to 100-9 for displaying the image, at which the IR sensor I is installed. After that, the matrix address is set based on the identification information, for example, remote keys 1, 2, 3, 4, 5, ... (refer to FIG. 8), transmitted from the remote controller 300 located adjacently to the IR sensor I.

An image recognition device may be mounted on each of the plurality of displays 100 and the wireless image transmission device 200 may sense a recognition object recognized by the image recognition device C shown in FIG. 9 of each of the displays for displaying the image. The wireless image transmission device 200 may set the matrix address based on a time sequence of sensing the recognition object.

For example, as shown in FIG. 9, the wireless image transmission device 200 may display a message such as "Sequentially move a device toward a camera of each display please" on a main display among the displays 100 for displaying the image and may convert into a matrix address setting state.

When the user allows the recognition object such as the remote controller 300 to be recognized by the image recognition device C of the display 100-2, the wireless image transmission device 200 displays that it is successfully recognized through the corresponding display 100. The user, who confirms it, performs a procedure of recognizing the remote controller 300 on a next image recognition device C of the display 100-3.

When the procedure of recognizing the remote controller 300 is performed on the last display 100-9 through the process described above, a recognition point in time for each display 100 is stored. The corresponding recognition points in time are arranged and matched with each matrix based on a combination of the displays presently detected, for example, 2x2, 3x3, 4x4, etc., thereby converting the recognition points in time into a matrix.

The wireless image transmission device 200 may set the matrix address in an order of times obtained through the described procedure such as timing (sec) 1 s, 1.5 s, 2.1 s, 2.4 s, 3.5 s, ... shown in FIG. 9. For example, when the display for displaying the image has a 3x3 matrix form, an address of a 3x3 matrix is matched based on an order of recognized displays 100 to set.

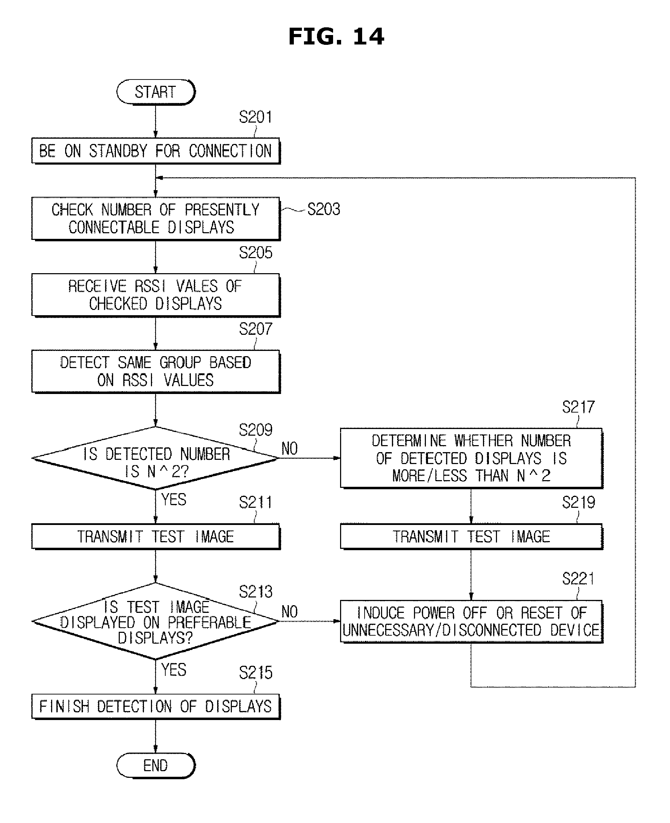

FIG. 14 is a flowchart illustrating a method of connecting displays illustrated in FIG. 13. For example, a method of detecting a display for displaying an image based on RSSI will be described.

As shown in FIG. 14, the plurality of displays 100 and the wireless image transmission device 200 may be put into a connection standby state (S201).

The wireless image transmission device 200 may search for a connectable display of the plurality of displays 100 (S203). The wireless image transmission device 200 may provide a combinable case by estimating the number of displays which the user intends to connect. Also, the wireless image transmission device 200 may check the number of the connectable displays and may store the checked number and MAC addresses thereof.

The wireless image transmission device 200 may receive signal strength information transmitted from the plurality of displays 100 through wireless communication (S205).

The wireless image transmission device 200 may detect the display for displaying the image among the plurality of displays 100 based on the strength of signals transmitted from the plurality of displays 100.

For example, the wireless image transmission device 200 may detect the display 100 of RSSI that belongs to an RSSI range of a particular group among RSSIs transmitted from the plurality of displays 100 (S207).

For example, as shown in FIG. 2, when searched displays 1 to 11 are present, the wireless image transmission device 200 may store MAC addresses thereof and may receive RSSIs of -50 dbm, -49 dbm, -49 dbm, -51 dbm, -52 dbm, -47 dbm, -50 dbm, -50 dbm, -48 dbm, -78 dbm, and -66 dbm from the respective searched displays 100.

The wireless image transmission device 200 may consider the displays 100 having similar RSSIs as the same group (except RSSIs of -78 dbm and -66 dbm among the RSSIs). The wireless image transmission device 200 may preset a range of RSSI to be considered as the same group.

Since an RSSI value of the display 100 is not regular but variable based on surrounding circumstances thereof, the wireless image transmission device 200 considers peripheral frequency circumstances and detects the RSSI several times, for example, RSSI2 (-50 dbm, -49 dbm, -49 dbm, -51 dbm, -52 dbm, -47 dbm, -50 dbm, -50 dbm, -48 dbm, -78 dbm, -66 dbm), and RSSI3(-50 dbm, -49 dbm, -49 dbm, -51 dbm, -52 dbm, -47 dbm, -50 dbm, -50 dbm, -48 dbm, -78 dbm, and -66 dbm) shown in FIG. 2, and derives an average value of RSSIs (an average RSSI shown in FIG. 2), thereby increasing accuracy. The RSSI for detecting the display for displaying image may be the average RSSI value.

It may be confirmed whether the number of the detected displays for displaying the image is identical to a preset display number such as n² (S209).

As a result of confirmation, when it is identical to the preset display number, the wireless image transmission device 200 may output a test image and a message inquiring whether to use the display to the display 100 for displaying the image (S211 and S213).

The wireless image transmission device 200 may determine the corresponding display 100 with respect to which a response for whether to use the display is received from the user as the display 100 for displaying the image (S215).

For example, when the number of the displays for displaying the image is n² and combinable, for example, 4, 9, 16, ..., the wireless image transmission device 200 transmits the test image for confirmation to the displays 100 for displaying the image and receives a confirmation from the user of whether all the displays which are to be connected are normally connected.

When four displays are detected, the wireless image transmission device 200 transmits the test image to the four detected displays 100-1, 100-2, 100-3, and 100-4 and then receives a confirmation from the user of whether all the displays 100 to be connected are normally detected.

For example, as shown in FIG. 4, when the four displays 100-1, 100-2, 100-3, and 100-4 are detected, the wireless image transmission device 200 transmits the test image to the detected four displays 100-1, 100-2, 100-3, and 100-4 and then displays a menu such as Yes and No shown in FIG. 4 for receiving a confirmation of whether the corresponding displays 100-1, 100-2, 100-3, and 100-4 are displays on which the user intends to display. When the test image is normally displayed on the displays on which the user intends to display, the wireless image transmission device 200 may finish the detecting of the display.

Meanwhile, when the number of the displays for displaying the image is not identical to the preset display number in S209, the wireless image transmission device 200 may output a test image and a display control request message to the display 100 for displaying the image (S217 to S221). Here, the display control request message may be a power off or reset inducing message with respect to an unnecessary display or a disconnected display.

For example, when the number of the displays for displaying the image is not identical to the preset display number, the wireless image transmission device 200 may output a display inspection inducing message on the display 100 for displaying the image and then may perform the detecting of the display again after a preset time passes. The number of the displays for displaying the image may be according to a rule of n². When a number is not n², the wireless image transmission device 200 may be provided for the user as shown in FIG. 6. For example, when the number of the detected displays for displaying the image is 2 to 6, the wireless image transmission device 200 considers the preset display number as 4 and may output a display control request message for detecting four displays.

Also, as shown in FIG. 5, when the wireless image transmission device 200 transmits the test image and then not all the displays on which the user intends to display are not normally detected or displayed, a device inspection inducing message for the display 100-4 on which the test image is not displayed, for example, "Check a disconnected device please" or a message for checking the unnecessarily connected display 100-5 and inducing power off, for example, "Turn off the power of an unnecessarily connected device please" may be displayed on the main display 100-1. The wireless image transmission device 200 may select a first or another one of the displays 100 which normally display the test image as the main display 100-1.

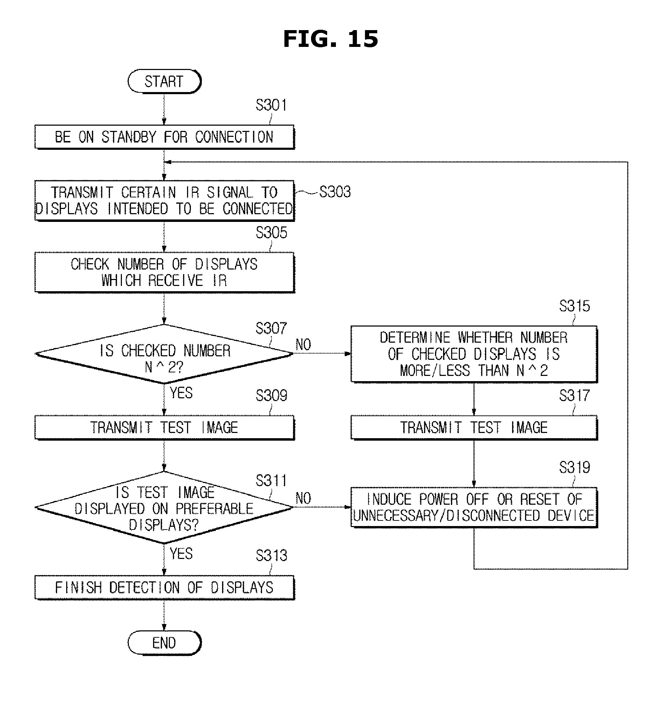

FIG. 15 is a flowchart illustrating a method of detecting the display for displaying the image based on an IR signal.

As shown in FIG. 15, the plurality of displays 100 and the wireless image transmission device 200 may be put into a connection standby state (S301).

The wireless image transmission device 200 may transmit a IR signal to the plurality of displays 100 (S303).

The wireless image transmission device 200 may detect the display 100 which transmits a reflected signal as a response among the plurality of displays 100 as the display for displaying the image. The reflected signal may be an IR signal.

For example, the wireless image transmission device 200 detects the display 100 which transmits a response IR signal, that is, the reflected signal for the IR signal among the plurality of displays 100 as the display 100 for displaying the image and may check the number thereof (S305).

For example, as shown in FIG. 3, when displays 1 to 11 are present and standby for connection, and the response IR signal is received (refer to IR enabled '0' of FIG. 3) from each of the displays 100 after transmitting the IR signal, the wireless image transmission device 200 may detect the corresponding displays 100 as the displays 100 for displaying the image.

It may be confirmed whether the number of the detected displays for displaying the image is identical to a preset display number such as n² (S307).

As a result of confirmation, when it is identical to the preset display number, the wireless image transmission device 200 may output a test image and a message of inquiring about whether to use the display to the display 100 for displaying the image (S309 and S311).

The wireless image transmission device 200 may determine the corresponding display 100 with respect to which a response for whether to use the display is received from the user as the display 100 for displaying the image (S313).

Meanwhile, when the number of the displays for displaying the image is not identical to the preset display number in S307, the wireless image transmission device 200 may output a test image and a display control request message to the display 100 for displaying the image (S315 to S319). The display control request message may be a power off or reset inducing message with respect to an unnecessary display or a disconnected display.

As is apparent from the above description, it is possible to provide a video wall which divides one image and displays divided portions of the image using a plurality of displays through wireless connection.

When a plurality of displays are connected, it is possible to accurately connect a display which the user intends to connect to a preferable position.

Although a few example embodiments have been illustrated and described, it will be appreciated by those skilled in the art that changes may be made in these example embodiments without departing from the invention, the scope of which is defined in the claims.

## Claims

1. A multi-display system comprising:
a plurality of displays for displaying an image; and
a wireless image transmission device wirelessly connected to the plurality of displays configured to search for a connectable display among the plurality of displays, to receive a signal transmitted from a display identified by the search, and to detect a display for displaying the image from among the plurality of displays based on the received signal,
wherein each of the plurality of displays display a divided portion of one image.

2. The system of claim 1, wherein the wireless image transmission device is configured to detect a plurality of displays having a received signal strength indication (RSSI) included within a predetermined RSSI range among RSSIs transmitted from the displays identified in the search are set as displays for displaying the image.

3. The system of claim 1 or claim 2, wherein the wireless image transmission device is configured to output a test message, and to display a message inquiring whether to use the display, or to display a message requesting a user to control the display, to the display for displaying the image.

4. The system of claim 1, wherein when the number of the displays for displaying the image is not identical to a preset display number, the wireless image transmission device is configured to output a display check recommendation message to the display for displaying the image and to perform detection of the display again after a preset time passes.

5. The system of any one of the preceding claims, wherein the wireless image transmission device is configured to match an identifiable address of each of the displays for displaying the image with a matrix address.

6. The system of claim 5, further comprising a remote controller configured to transmit and receive a signal with the displays wirelessly,
wherein the wireless image transmission device is configured to sequentially put the respective displays for displaying the image into a state for setting the matrix address, and to set the matrix address based on identification information transmitted from the remote controller.

7. The system of claim 5, further comprising:
a remote controller configured to transmit and receive an infrared (IR) signal with the displays; and
an IR sensor installed at each of the plurality of displays to transmit and receive the IR signal,
wherein the wireless image transmission device is configured to set the matrix address based on identification information of the IR signal received from the remote controller by the IR sensor from the remote controller at each of the displays,
or,
wherein the system further comprises:
an image recognition device installed at each of the plurality of displays to recognize an image,
wherein the wireless image transmission device is configured to set the matrix address based on a time sequence of sensing a recognition object by the image recognition device of each of the displays for displaying the image.

8. The system of any one of the preceding claims, wherein the signal transmitted from the display identified in the search is a radio frequency (RF) signal, or wherein the signal transmitted from the display identified in the search is an IR signal reflected by the display from the wireless image transmission device.

9. A multi-display method comprising:
putting a plurality of displays and a wireless image transmission device into a connection standby state;
searching, by the wireless image transmission device, for a connectable display among the plurality of displays;
receiving, at the wireless image transmission device, a signal transmitted from a display identified by the search through wireless communication; and
detecting, by the wireless image transmission device, a display for displaying an image from among the plurality of displays based on the received signal,
wherein each of the plurality of displays display a divided portion of one image.

10. The method of claim 9, wherein:
the signal is an RSSI, and
in the detecting of the display, a plurality of displays having an RSSI included within a predetermined RSSI range among RSSIs transmitted from the displays identified in the search are set as the display for displaying the image,
or wherein:
the signal transmitted from the display identified in the search is an IR signal reflected by the display from the wireless image transmission device.

11. The method of claim 9 or claim 10, wherein detecting of the display comprises:
outputting a test image and a message inquiring whether to use the display to the display for displaying the image; and
determining a corresponding display with respect to which a response for whether to use the display is received from a user as the display for displaying the image.

12. The method of claim 9 or claim 10, wherein detecting of the display comprises:
checking whether the number of the displays for displaying the image is identical to a preset display number; and
outputting, when the number is not identical to the preset display number, a test image and a message requesting a user to control the display to the display for displaying the image, wherein the message requesting control of the display may be one of a power off inducing message and a reset inducing message with respect to one of an unnecessary display and a disconnected display.

13. The method of any one of claims 9 to 12, further comprising, after the detecting of the display for displaying the image, matching, by the wireless image transmission device, a matrix address with an identifiable address of each of the displays for displaying the image.

14. The method of claim 13, wherein matching of the matrix address comprises:
sequentially putting, by the wireless image transmission device, each of the displays for displaying the image into a state for setting the matrix address; and
setting the matrix address of each of the displays based on identification information transmitted from a remote controller.

15. The method of claim 13, wherein:
each of the plurality of displays comprises an IR sensor, and matching of the matrix address comprises:
receiving, at the wireless image transmission device, identification information in an IR signal form received, from a remote controller, at the IR sensor of each of the plurality of displays for displaying the image; and
setting the matrix address based on the identification information,
or
each of the plurality of displays comprises an image recognition device, and matching of the matrix address comprises:
sensing, by the wireless image transmission device, a recognition object recognized by the image recognition device of each of the displays for displaying the image; and
setting the matrix address based on a time sequence of sensing the recognition object.
